# EUROPÄISCHE PATENTSCHRIFT

(11) **EP 0 716 803 B1**
(45) Veröffentlichungstag und Bekanntmachung des Hinweises auf die Patenterteilung: **07.06.2000**
(21) Anmeldenummer: 95119774.8
(22) Anmeldetag: 15.12.1995
(51) Int. Cl.: A01G 1/08

(54) **Bauteil zur Herstellung von Beeteinfassungen und Abgrenzungen in Gärten und Grünanlagen**
Building element for making edges and borders in gardens and green spaces
Elément de construction pour la fabrication de bordures et limites dans les jardins et espaces verts

(30) Priorität: 16.12.1994 DE 9420128 U
(43) Veröffentlichungstag der Anmeldung: 19.06.1996
(73) Patentinhaber: W. NEUDORFF GmbH KG, D-31860 Emmerthal 1 (DE)
(72) Erfinder: Kulenkampff, Hellmut E., 31789 Hameln (DE)
(74) Vertreter: Cohausz & Florack

(56) Entgegenhaltungen:
- DE-A- 2 841 794
- DE-A- 2 945 292
- DE-A- 3 023 309
- DE-U- 8 427 662
- DE-U- 9 112 998
- DE-U- 9 211 620
- DE-U- 9 216 128
- DE-U- 9 420 128
- FR-A- 2 661 461
- GB-A- 609 905
- US-A- 4 869 018
- US-A- 5 119 587
- US-A- 5 259 154

## Beschreibung

Die Erfindung betrifft ein Bauteil zur Herstellung von Beeteinfassungen und Abgrenzungen aus mehreren entsprechenden Bauteilen, wobei das jeweilige Bauteil zur lösbaren Verbindung entsprechender Bauteile an der unteren Hälfte einer Stirnseite eine Öse und an der oberen Hälfte der anderen Stirnseite einen entsprechenden teilzylindrischen, mit einer Ausnehmung versehenen Ansatz aufweist.

Ein derartiges Bauteil ist aus der FR 2 661 461 A1 sowie der US-A-4 869 018 bekannt.

Ferner ist aus der DE 30 23 309 A1 ein Profil zur Begrenzung einer Garten- oder Beetfläche mit einer Rinne zum Einlegen von Gift oder Abwehrstoffen bekannt, wobei diese Rinne mit einer Abdeckung versehen ist. Besagte Profilquerschnitte weisen eine F-Form auf und sind zusammensteckbar ausgebildet.

Aus der DE 92 11 620 U1 ist eine Einfassung für Gartenbeete mit langgestreckten Einfassungselementen bekannt. Die Verbindung dieser Elemente kann dadurch erfolgen, daß über eine geringe Länge das Profil um etwa eine Wandstärke vergrößert ist, so daß ein anderes Ende eines weiteren Einfassungselements darin klemmend eingesteckt werden kann. Ferner werden scharnierartige Verbindungselemente vorgesehen, die aus einer Hülse und einem mit Zapfen, Steg und Anschlußteil versehenen Element bestehen.

Die DE 91 12 998 U1 offenbart ein Formteil, das insbesondere zur Errichtung einer Begrenzungswand für einen Sandkasten bestimmt ist und einen Wandabschnitt mit zwei vertikalen Endkantenbereichen aufweist, an denen in der Höhe gegeneinander versetzt je ein Verbindungsabschnitt mit einem vertikalen Loch derart angesetzt ist, daß die Löcher eines oberen Verbindungsabschnitts und eines unteren Verbindungsabschnitts benachbarter Formteile in Flucht zu bringen und durch einen separaten Stecker miteinander zu verbinden sind.

Nachteilig an diesem Stand der Technik ist, daß für die Verbindung zweier Bauteile stets zusätzliche Kupplungsteile erforderlich sind, welche die Produktionskosten und den Montageaufwand erhöhen.

Die US 5 119 587 betrifft Beeteinfassungselemente mit Konvex/konkaver Ausbildung der Stirnseiten, wodurch eine gewisse Fixierung horizontal benachbarter Bauteile erreicht wird. Diese Elemente können zur Verbindung horizontal benachbarter Elemente an einer Seite einen Stift und an der anderen Seite eine Ausnehmung zur Aufnahme des Stifts eines horizontal benachbarten Elements aufweisen. Ein solches Element ist aber nicht zur Verbindung mit einem weiteren vertikal angeordneten Element geeignet.

Aufgabe der Erfindung ist es deshalb, Bauteile der eingangs genannten Art bereitzustellen, die keine zusätzlichen Kupplungsteile erforderlich machen.

Erfindungsgemäß wird diese Aufgabe gelöst durch ein Bauteil zur Herstellung von Beeteinfassungen und Abgrenzungen in Gärten und Grünanlagen aus mehreren entsprechenden Bauteilen, wobei das jeweilige Bauteil zur lösbaren Verbindung entsprechender Bauteile an der unteren Hälfte einer Stirnseite eine teilzylindrische Öse und an der oberen Hälfte der anderen Stirnseite einen entsprechenden teilzylindrischen, mit einer Ausnehmung versehenen Ansatz aufweist, wobei sich an den Ansatz an der unteren der Ausnehmung gegenüberliegenden Seite ein Stift anschließt, der zusammen mit der Öse eines in horizontaler Richtung benachbarten Bauteils zum Verbinden der beiden Bauteile ausgebildet ist, wobei die Öse, der Ansatz und der Stift alle Bestandteile des Bauteils sind, und wobei die Ausnehmung und der Stift so ausgebildet sind, daß wenn zwei Bauteile vertikal aufeinander gesetzt werden, der untere Teil des Stifts des oberen Bauteils in der Ausnehmung des darunter befindlichen Bauteils sitzt.

Durch einfaches Ineinanderstecken der einzelnen Bauteile können praktisch beliebige Längen und Formen hergestellt werden. Das Bauteil kann jede praktische Abmessung haben, die auf den Verwendungszweck und die Bodenbeschaffenheit abgestimmt sein kann. Ferner ist es möglich, mehrere Bauelemente aufeinander zu setzen. Bei dieser Ausführungsform sitzt der untere Teil des Stifts in der Ausnehmung des darunter befindlichen Bauteils. Die erfindungsgemäßen Bauteile können somit auch in der Höhe stabil miteinander kombiniert werden.

Nachfolgend werden bevorzugte Ausführungsformen erläutert.

Eine allgemein anwendbare Größe weist eine Länge von etwa 60 cm, eine Breite von etwa 5 cm und eine Höhe von etwa 13 bis 15 cm auf. Das Bauteil ist aus einem geeigneten Kunststoff, vorzugsweise Recycling-Kunststoff, gefertigt, könnte aber auch aus Metall wie Aluminium bestehen. Zur Steigerung der Festigkeit und Steifigkeit sind im Inneren des U-Profils Aussteifungen in der Form von Querwänden gebildet. Das Bauteil wird im Gebrauch mit einer offenen Seite nach unten in den Boden gedrückt, zu welchem Zweck die Ränder der Flansche des U-Profiles und der freie Rand der Querwände schneidenartig verjüngt (d.h. abgefast) sind.

Beim Aneinanderstecken der Bauteile greift der Stift des teilzylindrischen Ansatzes durch die Öse hindurch und dringt vorzugsweise ebenfalls ein entsprechendes Stück in den Erdboden ein. Der teilzylindrische Ansatz liegt dann auf der Öse, die ebenfalls teilzylindrisch gebildet ist und ergänzt diese zur vollen Profilhöhe, so daß die aneinandergesteckten Bauteile einen lückenlosen Strang gleicher Höhe der Abgrenzung ergeben.

In einer weiteren Ausgestaltung des erfindungsgemäßen Bauteils können die Bohrungen der Ösen mit Federn oder Nuten versehen sein, die mit entsprechenden Nuten oder Federn am Stift zusammenwirken, so daß sich formschlüssige Verbindungen ergeben. Die Bohrungen oder Ausnehmungen der teilzylindrischen Ansätze, welche die Stifte tragen, und gegebenenfalls diejenigen der Stifte, dienen auch der Aufnahme von Rohrbügeln für Tunnelfolien oder derjenigen von Mehrzweckstangen oder Mehrzweckbügeln. Ebenso können Taschen in dem Profil enthalten sein, in die Stützen, Stäbe und Latten für Gartenpflanzen einsteckbar sind. Werden die Ausnehmungen oder Bohrungen der Ansätze nicht benötigt, können sie mit einer Kappe verschlossen werden.

Weitere Möglichkeiten zur Berücksichtigung gartenarchitektischer Ausgestaltungen sind möglich, z.B. Halterunen für Lampen und Leuchten.

Schließlich kann der Rand des Profiles mit einer Auskragung als Schneckenbarriere versehen sein, die rechtwinklig angeformt und wegsteht und ein Schneckenrepellent unter sich aufnimmt, welches dann gleichzeitig gegen Regen geschützt ist. Diese Schneckenabwehrkante ist so konstruiert, daß die Enden der überkragenden Kante beim Zusammenstecken der Elemente in gerader Verlängerung übereinander passen. Dieses wird dadurch ermöglicht, daß die Kanten leicht versetzt angeformt sind. Bis zu einem Winkel von 33° reicht die Länge der angeformten Kante aus, um den Winkel zu schließen. Bei einem Winkel von 90° wird die entstehende Unterbrechung an der Schneckenabwehrkante durch ein Zusatzteil überbrückt, das nachträglich auf das eine Ende der Auskragung gesteckt werden kann.

Andererseits kann die Auskragung als Rasenkante dienen, wobei sie in diesem Fall auf dem Boden aufliegt. Sie dient in dieser Ausführungsvariante als Laufschiene für die Räder des Rasenmähers und gewährleistet einen sauberen Schnitt des Rasens.

Das oben beschriebene Bauteil ist als langgestrecktes, gerades Bauteil beschrieben und in der Zeichnung dargestellt. Es kann aber mit den gleichen erfindungsgemäßen Merkmalen auch gekrümmt, d.h. bogenförmig ausgeführt sein, beispielsweise derart, daß 20 bogenförmige Bauteile einen Vollkreis ergeben, um ein Blumenrondell einzufassen.

Die Neuerung wird nun anhand der Zeichnung, die Ausführungsbeispiele zeigt, näher erläutert. In der Zeichnung stellen dar:

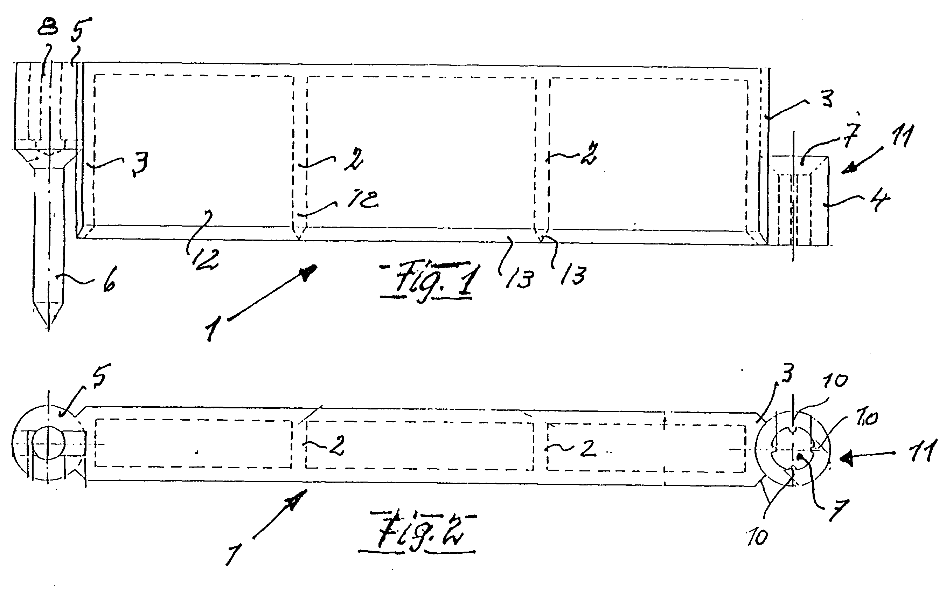

- Fig. 1: eine Seitenansicht des erfindungsgemäßen Bauteils,
- Fig. 2: eine Draufsicht,
- Fig. 3: eine abgewandelte Ausführungsform,
- Fig. 4: einen Querschnitt,
- Fig. 5: eine Draufsicht zweier zusammengesteckter Bauteile in ihrer Verschwenkbarkeit,
- Fig. 6: seine Seitenansicht am Ende des Bauteils und
- Fig. 7: eine Aufsicht auf die Stirnseite am Ende des Bauteils.

Das Bauteil umfaßt als Hauptteil ein U-förmiges Profil 1 aus Kunststoff, welches in seinem Inneren Querwände 2 zur Aussteifung enthält. Die Enden des Profils 1 sind durch Stirnwände 3 abgeschlossen. Jede Stirnwand 3 trägt einen teilzylindrischen Ansatz 4 bzw. 5, von denen der eine Ansatz 4 an der unteren Hälfte der Stirnwand 3 angeformt ist, während der andere Ansatz 5 an der oberen Hälfte der anderen Stirnwand angeformt ist.

Der obere Ansatz 5 ist nach unten durch einen Stift 6 verlängert, der beim Zusammenstecken zweier Bauteile durch die Bohrung 7 des eine Öse 11 bildenden unteren Ansatzes hindurchgreift und weiter ein gewünschtes Stück in den Erdboden eindringt.

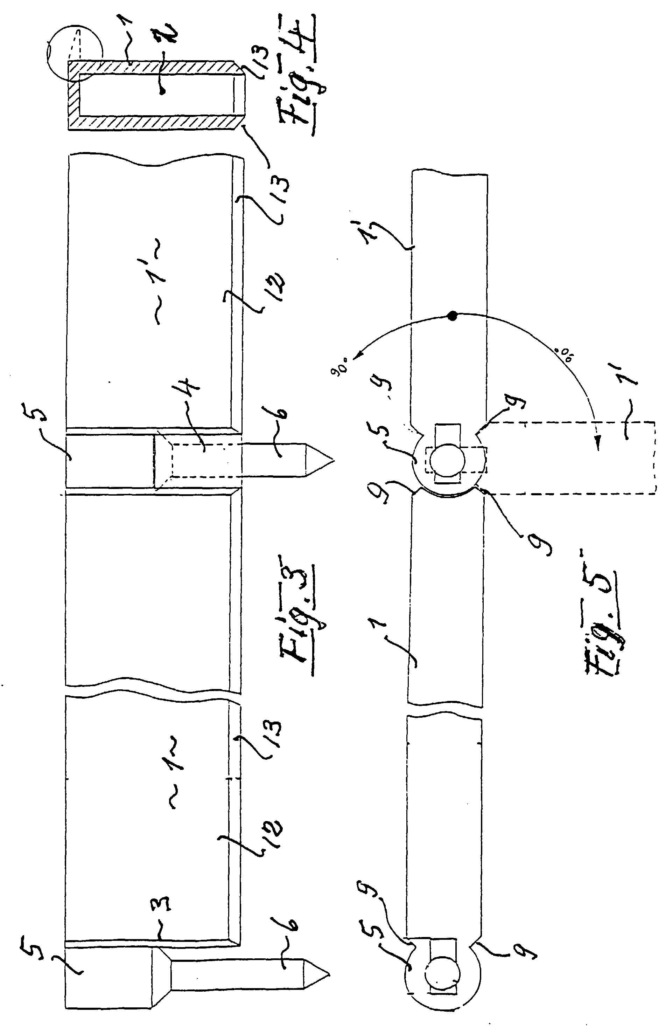

Dadurch findet eine vollständige Schließung der Lücke zwischen den Bauteilen 1 und 1' (Fig. 3 und 5) statt, wenn zwei Bauteile zusammengesteckt sind.

Wie aus Fig. 3 und Fig. 5 hervorgeht, können die Bauteile 1 und 1' gegeneinander verschwenkt werden, so daß beispielsweise ein rechter Winkel (Fig. 5) oder auch ein Winkel von 45° entsteht. Damit diese Verschwenkbarkeit möglich wird, sind Teile der Seiten des Profils 1 abgeschrägt wie bei 9 gezeigt.

Schließlich können Bohrung 7 und Stift 6 mit Profilierungen wie Nut und Feder versehen sein, so daß sich eine formschlüssige Verbindung ergibt, wie in Fig. 2 bei 10 in der Bohrung 7 der Öse 11 angedeutet.

Damit die Bauteile leichter in den Erdboden hineingedrückt werden können, sind ihre voraneilenden Kanten 12 abgeschrägt oder angefast wie bei 13 gezeigt.

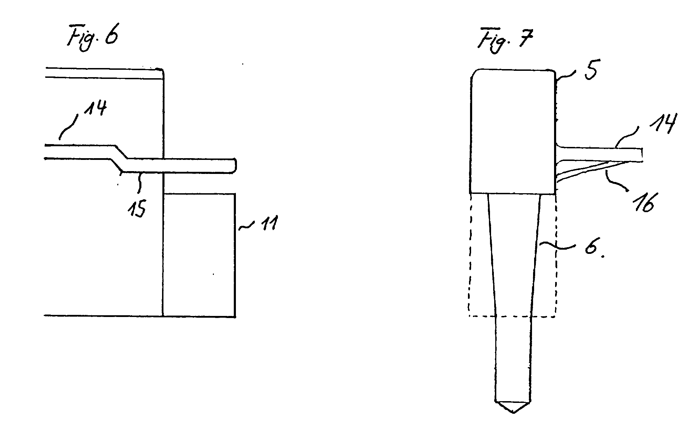

In der Fig. 6 ist die Seite des Bauteils mit mit Auskragung 14,15 an der Verbindungsstelle zum nächsten Bauteil gezeigt. Hier ist die ankragende, rechtwinklig angeformte Kante 14,15 versetzt ausgebildet, damit zur Verbindung zweier Bauteile beim Zusammenstecken die ankragenden Kanten übereinander passen.

In der in Fig. 7 dargestellten Ausführungsform ist die Auskragung 14 zu sehen, die seitlich am Bauteil in diesem Fall mit einer Verstärkungsrippe 16, welche fest mit der Auskragung verbunden ist, angeformt ist.

## Patentansprüche

1. Bauteil zur Herstellung von Beeteinfassungen und Abgrenzungen in Gärten und Grünanlagen aus mehreren entsprechenden Bauteilen, wobei das jeweilige Bauteil (1, 1') zur lösbaren Verbindung entsprechender Bauteile (1, 1') an der unteren Hälfte einer Stirnseite (3) eine teilzylindrische Öse (11) und an der oberen Hälfte der anderen Stirnseite einen entsprechenden teilzylindrischen, mit einer Ausnehmung (8) versehenen Ansatz (5) aufweist, wobei sich an den Ansatz (5) an der unteren der Ausnehmung gegenüberliegenden Seite ein Stift (6) anschließt, der zusammen mit der Öse (11) eines in horizontaler Richtung benachbarten Bauteils zum Verbinden der beiden Bauteile (1,1') ausgebildet ist, und wobei die Öse, der Ansatz und der Stift alle Bestandteile des Bauteils sind,
**dadurch gekennzeichnet,**
daß die Ausnehmung (8) und der Stift (6) so ausgebildet sind, daß wenn zwei Bauteile (1,1') vertikal aufeinander gesetzt werden, der untere Teil des Stifts des oberen Bauteils in der Ausnehmung des darunter befindlichen Bauteils sitzt.

2. Bauteil nach Anspruch 1, dadurch gekennzeichnet, daß es in Form eines U-Profils ausgestaltet ist.

3. Bauteil nach einem der vorhergehenden Ansprüche, dadurch gekennzeichnet, daß das Bauteil (1, 1') gerade oder bogenförmig ausgebildet ist.

4. Bauteil nach einem der vorhergehenden Ansprüche, dadurch gekennzeichnet, daß die in das Erdreich eindringenden Ränder (12) des U-Profils abgeschrägt sind.

5. Bauteil nach einem der vorhergehenden Ansprüche, dadurch gekennzeichnet, daß das U-Profil des Bauteils (1, 1') im Inneren Querwände (2) aufweist.

6. Bauteil nach einem der vorhergehenden Ansprüche, dadurch gekennzeichnet, daß die Bohrung (7) in der Öse (11) als auch der Stift (6) Profilierungen (10) zur formschlüssigen Verbindung zweier Bauteile (1, 1') aufweisen.

7. Bauteil nach einem der vorhergehenden Ansprüche, dadurch gekennzeichnet, daß seitlich längs des Bauteils eine Auskragung angeformt ist.

8. Bauteil nach einem der vorhergehenden Ansprüche, dadurch gekennzeichnet, daß die Enden (9) der Bauteile (1) an der Verbindungsstelle zum Ansatz (5) abgeschrägt sind.

9. Bauteil nach einem der vorhergehenden Ansprüche, dadurch gekennzeichnet, daß es aus Kunststoff, vorzugsweise Recycling-Kunststoff, besteht.

## Claims

1. A building element for making edges and borders for gardening and landscaping, composed of a plurality of corresponding building elements, where the respective building element (1, 1') has a partially cylindrical eyelet (11) on the lower half of the end face (3) for detachable joining of corresponding building elements (1, 1'), and on the upper half of the other end face it has a corresponding partially cylindrical extension (5) provided with a recess (8), where a stud (6) engages with the extension (5) on the lower side opposite the recess, working together with the eyelet (11) of a horizontally adjacent building element for joining the two building elements (1, 1'), and where the eyelet, the extension and the stud are all components of the building element, characterized in that the recess (8) and the stud (6) are designed so that when two building elements (1, 1') are stacked vertically, the lower part of the stud of the upper building element sits in the recess in the building element beneath it.

2. A building element according to Claim 1,
characterized in that it is designed in the form of a U-shaped section.

3. A building element according to one of the preceding claims, characterized in that the building element (1, 1') is designed to be straight or curved.

4. A building element according to one of the preceding claims, characterized in that the edges (12) of the U-shaped section penetrating into the ground are chamfered.

5. A building element according to one of the preceding claims, characterized in that the U-shaped section of the building element (1, 1') has transverse walls (2) on the inside.

6. A building element according to one of the preceding claims, characterized in that the bore (7) has profilings (10) in the eyelet (11) as well as the stud (6) to produce a form-fitting connection of two building elements (1, 1').

7. A building element according to one of the preceding claims, characterized in that a collar is molded longitudinally on the side of the building element.

8. A building element according to one of the preceding claims, characterized in that the ends (9) of the building elements (1) are chamfered at the point of joining to the extension (5).

9. A building element according to one of the preceding claims, characterized in that it is made of plastic, preferably a recycled plastic.

## Revendications

1. Élément de construction pour l'édification de bordures et limites pour jardins et espaces verts en plusieurs éléments de construction appropriés (1, 1'), où chaque élément présente pour une connexion amovible des éléments correspondants (1, 1'), sur la moitié inférieure d'une face (3), un oeillet partiellement cylindrique (11) et sur la moitié supérieure de l'autre face, un embout partiellement cylindrique adapté (15) muni d'un orifice (8), où une cheville (6) se connecte à l'embout (5) sur le côté inférieur opposé à l'orifice, laquelle cheville, avec l'oeillet (11) d'un élément de construction voisin en direction horizontale, est formée pour la connexion des deux éléments de construction (1, 1'), où l'oeillet, l'embout et la cheville sont des constituants de l'élément de construction et où l'orifice (8) et la cheville (6) sont conçus de telle manière que quand deux éléments (1, 1') sont placés l'un sur l'autre verticalement, la partie inférieure de la cheville de l'élément supérieur se place dans l'orifice de l'élément qui se trouve en dessous.

2. Élément de construction suivant la revendication 1, caractérisé en ce qu'il est élaboré en forme d'un profil en U.

3. Élément de construction suivant l'une quelconque des revendications précédentes, caractérisé en ce que l'élément (1, 1') est élaboré droit ou arqué.

4. Élément de construction suivant l'une quelconque des revendications précédentes, caractérisé en ce que le bord (12) du profil en U qui pénètre dans la terre, est biseauté.

5. Élément de construction suivant l'une quelconque des revendications précédentes, caractérisé en ce que le profil en U de l'élément de construction (1, 1') présente une paroi transversale (2), à l'intérieur.

6. Élément de construction suivant l'une quelconque des revendications précédentes, caractérisé en ce que le forage (7) de l'oeillet (11), mais également la cheville (6) présentent des profilages (10) pour une connexion à engagement des deux éléments (1, 1').

7. Élément de construction suivant l'une quelconque des revendications précédentes, caractérisé en ce qu'une saillie est formée latéralement, le long de l'élément de construction.

8. Élément de construction suivant l'une quelconque des revendications précédentes, caractérisé en ce que les extrémités (9) de l'élément (1) sont biseautées à l'endroit de connexion à l'embout (5).

9. Élément de construction suivant l'une quelconque des revendications précédentes, caractérisé en ce qu'il consiste en une matière plastique, de préférence une matière plastique recyclée.
